# EUROPEAN PATENT APPLICATION

(11) **EP 4 852 472 A1**
(43) Date of publication of application: **09.12.2026**
(21) Application number: 25747634.1
(22) Date of filing: 21.01.2025
(51) Int. Cl.: H04W 4/70, H04W 4/80

(54) **INFORMATION TRANSMISSION METHOD AND APPARATUS, AND COMMUNICATION DEVICE**

(30) Priority: 30.01.2024 CN 202410128306
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); MA, Xinyu, Beijing 100085 (CN)
(74) Representative: Studio Torta S.p.A.
(86) International application number: PCT/CN2025/073596
(87) International publication number: WO 2025/162062

(57) **Abstract**

This disclosure provides an information transmission method and apparatus, and communication device. The method is performed by a first device, and includes: sending at least one target signal to a second device; receiving at least one response signal from the second device, the response signal being sent and/or reflected based on the at least one target signal; and establishing a connection with the second device based on the response signal; wherein the second device is an Internet of Things (IoT) device.

## Description

### CROSS-REFERENCE TO RELATED APPLICATION

This application claims priority to Chinese Patent Application No. 202410128306.9, filed with the CNIPA on January 30, 2024, entitled "information transmission method and apparatus, and communication device", disclosure of which is incorporated herein by reference in its entirety.

### TECHNICAL FIELD

This disclosure relates to the field of communication technology, and in particular to an information transmission method and apparatus, and a communication device.

### BACKGROUND

3rd Generation Partnership Project (3GPP) has defined a new type of Internet of Things (IoT) devices: Ambient Internet of Things (A-IoT), which is designed for low-complexity, low-cost, and low-power low-end IoT devices. A-IoT devices have little or no power supply, and are characterized by low energy consumption and low cost. A-IoT includes three device types: Device A, Device B, and Device C. Devices A and B have little or no power supply, do not have the capability of performing communication actively and can only backscatter received signals, carrying information in the backscattered signal. Device C can actively transmit signals. Due to the low power consumption, low complexity, and lack of power supply or limited power supply of A-IoT devices, the signals and procedures used for access and paging in existing New Radio (NR) systems are unsuitable for the communication scenarios of conventional A-IoT devices.

How to achieve communication of IoT devices (especially A-IoT devices) is an urgent problem to be solved.

### SUMMARY

Embodiments of this disclosure provide an information transmission method and apparatus, and a communication device, to enable communication of Internet of Things (IoT) devices.

To address the aforementioned technical problem, an embodiment of this disclosure provides an information transmission method, performed by a first device, including:
sending at least one target signal to a second device;
receiving at least one response signal from the second device, the response signal being transmitted and /or reflected based on the at least one target signal;
establishing a connection with the second device based on the response signal;
wherein the second device is an Internet of Things (IoT) device.

In some embodiments, sending at least one target signal to the second device includes at least one of the following:
sending a first target signal to the second device, wherein the first target signal includes configuration information of at least one access parameter; or
sending at least one second target signal to the second device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, before the sending the at least one target signal to the second device, the method further includes at least one of the following:
sending a first signal to the second device, the first signal being used by the second device to perform energy harvesting and/or energy storage; or
sending a second signal to the second device, the second signal being used by the second device for synchronization and/or timing.

An embodiment of this disclosure further provides an information transmission method, performed by a second device, including:
receiving at least one target signal sent by a first device; and
sending and/or reflecting at least one response signal to the first device based on the at least one target signal;
wherein the second device is an Internet of Things (IoT) device.

In some embodiments, receiving at least one target signal sent by the first device includes at least one of the following:
receiving a first target signal sent by the first device, wherein the first target signal includes configuration information of at least one access parameter; or
receiving a second target signal sent by the first device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, sending and/or reflecting at least one response signal to the first device based on the at least one target signal includes:
obtaining the response signal corresponding to the target signal based on the received target signal; and
sending and/or reflecting the response signal to the first device.

In some embodiments, before receiving at least one target signal sent by the first device, the method further includes at least one of the following:
receiving a first signal sent by the first device, the first signal being used by the second device to perform energy harvesting and/or energy storage; or
receiving a second signal sent by the first device, the second signal being used by the second device for synchronization and/or timing.

An embodiment of this disclosure further provides a communication device, which is a first device and includes a memory, a transceiver, and a processor;
the memory is used for storing a computer program; the transceiver is used for sending and receiving data under the control of the processor; and the processor is used for reading the computer program from the memory and performing the following steps:
sending at least one target signal to a second device via the transceiver;
receiving at least one response signal from the second device, the response signal being sent and/or reflected based on the at least one target signal; and
establishing a connection with the second device based on the response signal;
wherein the second device is an Internet of Things (IoT) device.

In some embodiments, the processor is used for reading the computer program from the memory and performing at least one of the following steps:
sending a first target signal to the second device, wherein the first target signal includes configuration information of at least one access parameter; or
sending at least one second target signal to the second device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, the processor is used for reading the computer program from the memory and performing at least one of the following steps:
sending a first signal to the second device, the first signal being used by the second device to perform energy harvesting and/or energy storage; or
sending a second signal to the second device, the second signal being used by the second device for synchronization and/or timing.

An embodiment of this disclosure further provides a communication device, which is a second device, and includes a memory, a transceiver, and a processor;
the memory is used for storing a computer program; the transceiver is used for sending and receiving data under the control of the processor; and the processor is used for reading the computer program from the memory and performing the following steps:
receiving at least one target signal sent by a first device via the transceiver; and
sending and/or reflecting at least one response signal to the first device based on the at least one target signal;
wherein the second device is an Internet of Things (IoT) device.

In some embodiments, the processor is used for reading the computer program from the memory and performing at least one of the following steps:
receiving a first target signal sent by the first device, wherein the first target signal includes configuration information of at least one access parameter; or
receiving a second target signal sent by the first device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, the processor is used for reading the computer program from the memory and performing the following steps:
obtaining the response signal corresponding to the target signal based on the received target signal; and
sending and/or reflecting the response signal to the first device.

In some embodiments, the processor is used for reading the computer program from the memory and performing at least one of the following steps:
receiving a first signal sent by the first device, the first signal being used by the second device to perform energy harvesting and/or energy storage; or
receiving a second signal sent by the first device, the second signal being used by the second device for synchronization and/or timing.

An embodiment of this disclosure further provides an information transmission apparatus, applied to a first device, including:
a first sending unit, configured to send at least one target signal to a second device;
a first receiving unit, configured to receive at least one response signal from the second device, the response signal being sent and/or reflected based on the at least one target signal; and
an establishment unit, configured to establish a connection with the second device based on the response signal;
wherein the second device is an Internet of Things (IoT) device.

An embodiment of this disclosure further provides an information transmission apparatus, applied to a second device, including:
a second receiving unit, configured to receive at least one target signal sent by a first device; and
a second sending unit, configured to send and/or reflect at least one response signal to the first device based on the at least one target signal;
wherein the second device is an Internet of Things (IoT) device.

An embodiment of this disclosure further provides a processor-readable storage medium storing a computer program, wherein the computer program is configured to cause a processor to perform the methods described above.

An embodiment of this disclosure further provides a computer program product including computer instructions, wherein the computer instructions, when executed by a processor, implement the steps of the methods described above.

This disclosure has the following beneficial effects.

In the above scheme, a target signal is sent to the IoT device, a response signal fed back by the IoT device is received, and a connection with the IoT device is established based on the response signal; in this way, communication of the IoT devices can be established, thereby achieving communication of the IoT devices.

### BRIEF DESCRIPTION OF THE DRAWINGS

To more clearly illustrate the technical solutions in the embodiments or related art of this disclosure, the accompanying drawings used in the description of the embodiments or related art will be briefly introduced below. Obviously, the accompanying drawings described below are only some embodiments set forth in this disclosure. For those skilled in the art, additional drawings can be obtained based on these drawings without creative effort.
Fig. 1 shows a structural diagram of a network system to which embodiments of this disclosure are applicable;
Fig. 2 shows a flowchart of an information transmission method according to an embodiment of this disclosure;
Fig. 3 shows a timing flow diagram of an access and paging process employing one query signal and one response signal in the first application scenario;
Fig. 4 shows a timing flow diagram of an access and paging process employing multiple query signals and multiple response signals in the first application scenario;
Fig. 5 shows a timing flow diagram of an access and paging process employing one query signal and one response signal in the second application scenario;
Fig. 6 shows a timing flow diagram of an access and paging process employing multiple query signals and multiple response signals in the second application scenario;
Fig. 7 shows a timing flow diagram of an access and paging process employing one query signal and one response signal in the third application scenario;
Fig. 8 shows a timing flow diagram of an access and paging process employing multiple query signals and multiple response signals in the third application scenario;
Fig. 9 shows a timing flow diagram of an access and paging process employing one query signal and one response signal in the fourth application scenario;
Fig. 10 shows a timing flow diagram of an access and paging process employing multiple query signals and multiple response signals in the fourth application scenario;
Fig. 11 shows another flowchart of an information transmission method according to an embodiment of the present disclosure;
Fig. 12 shows a modular diagram of an information transmission apparatus according to an embodiment of the present disclosure;
Fig. 13 shows a structural diagram of a first device according to an embodiment of the present disclosure;
Fig. 14 shows another modular diagram of an information transmission apparatus according to an embodiment of the present disclosure;
Fig. 15 shows a structural diagram of a second device according to an embodiment of the present disclosure.

### DETAILED DESCRIPTION

Technical solutions of the embodiments of this disclosure will be clearly and completely described below with reference to the accompanying drawings. Obviously, the described embodiments are only some, not all, of the embodiments of this disclosure. Based on the embodiments of this disclosure, all other embodiments obtained by those skilled in the art without creative effort are within the scope of this disclosure.

The terms "first", "second" and the like in the specification and the claims of this disclosure are used to distinguish similar objects and are not necessarily used to describe a particular order or sequence. It should be understood that such use of data can be interchanged where appropriate so that embodiments of this disclosure described herein may be implemented, for example, in sequences other than those illustrated or described herein. Furthermore, the terms "including" and "having", and any variations thereof, are intended to cover a non-exclusive inclusion; for example, a process, method, system, product, or apparatus that includes a series of steps or units is not necessarily limited to those steps or units explicitly listed, but may include other steps or units not explicitly listed or inherent in such processes, methods, products, or apparatus.

The term "and/or" in the embodiments of this disclosure describes the relationship between related objects, indicating that three relationships can exist. For example, A and/or B can represent: A existing alone, A and B existing simultaneously, or B existing alone. The character "/" generally indicates that the preceding and following related objects have an "or" relationship. In this disclosure, the term "multiple" refers to two or more objects, and other quantifiers are similar.

In the embodiments of this disclosure, the terms "exemplary" or "for example" is used to indicate that something is an example, illustration, or description. Any embodiment or design described as "exemplary" or "for example" in this disclosure should not be construed as being more preferred or advantageous than other embodiments or designs. Specifically, the use of terms such as "exemplary" or "for example" is intended to present the relevant concepts in a specific manner.

The following is a brief explanation of the relevant concepts mentioned in this disclosure.

### 1. Backscatter communication

A backscatter communication system includes an excitation signal source and a signal reflection device. The system typically includes a reader and a reflective tag. The reader generates radio frequency (RF) excitation signals, while the reflective tag is a device capable of reflecting RF signals. The reader sends an RF signal to the reflective tag, the reflective tag receives the signal sent from the excitation signal source and reflects it back. By changing the load impedance of the reflective tag's antenna, information is modulated into the backscattered signal. When the reflection coefficient is configured as a first reflection coefficient, the energy of the excitation signal is completely absorbed by the tag antenna; when the reflection coefficient is configured as a second reflection coefficient, the excitation signal is completely reflected; and when the reflection coefficient is configured as a third reflection coefficient, the excitation signal is partially absorbed and partially reflected.

### 2. Possible receiver architectures for A-IoT

For A-IoT devices, their receiver structures are extremely simple, and may only include some simple receiver components, e.g., including only a receiver architecture based on on-off keying (OOK) signals. Because the receiver cannot perform inverse fast Fourier transform (IFFT)/fast Fourier transform (FFT) operation, A-IoT devices cannot receive and process the configuration parameters for access and paging, thus failing to complete the access and paging process.

### 3. New Radio (NR) random access

In NR systems, through random access, the base station assigns a unique identifier to each user equipment (UE, also known as a terminal or terminal device), and can also identify which terminal devices are accessing the system. The random access procedure includes:
A. the UE sends a random access preamble sequence (i.e., message 1 (Msg1)) on the physical random access channel (PRACH);
B. the UE receives a random access response (RAR) message (i.e. message 2 (Msg2)) on the physical downlink control channel (PDCCH)/physical downlink shared channel (PDSCH);
C. the UE sends a message 3 (Msg3) on the physical uplink shared channel (PDSCH);
D. the UE receives a contention resolution message (i.e. message 4 (Msg4)) on the PDSCH channel.

Before the random access procedure, the terminal obtains, through system broadcast messages, parameters of a set of synchronization signal/physical broadcast channel (PBCH) block (SSB) indexes, physical layer time-frequency resources, random access preamble sequence format, and a set of random access preamble sequences. Then, the UE generates a random access preamble sequence based on the obtained information, and initiates random access on the corresponding physical layer random access time-frequency resources.

The base station performs PRACH detection. If the base station detects a preamble sequence, the base station feeds back the corresponding RAR information on the PDCCH/PDSCH. After sending the random access preamble sequence, the terminal detects the RAR information fed back on the PDCCH/PDSCH within an RAR time window. If the corresponding RAR information is detected, it means that the random access preamble sequence sent by the UE has been detected by the base station. The RAR information also includes uplink timing advance adjustment amount for the UE. Based on this adjustment amount, the terminal can obtain uplink synchronization and then send an uplink resource scheduling request message for subsequent data transmission.

In some embodiments, the random access procedure further includes:
A. the terminal sends a message 1, the message 1 containing not only the random access preamble sequence but also uplink data;
B. the base station sends a message 2, the message 2 containing the UE ID or cell radio network temporary identifier (C-RNTI) used for contention resolution, in addition to the random access preamble identifier and the timing advance command (TAC).

### 4. NR paging process

In NR systems, base stations locate terminals via paging, to detect UE accessibility, and perform the following actions: triggering the UE's radio resource control (RRC) connection establishment process, triggering UE RRC recovery, and notifying the UE to update system messages or receive earthquake and tsunami warning system (ETWS)/commercial mobile alert service (CMAS) notifications. There are two paging triggering methods in NR: core network triggering and base station triggering.

First, the standard defines the monitoring of paging in the radio resource control (RRC) idle/inactive state. The UE calculates the paging frame (PF) and the location of paging occasion (PO) according to the parameter configuration. At the PO, the UE monitors the downlink control information (DCI) scrambled with the paging radio network temporary identifier (P-RNTI) in the paging search space (SS), and then performs demodulation and decoding to obtain the PDSCH carrying the paging message. After demodulating and decoding the PDSCH, the UE obtains the UE list information used for recording the UEs to which the paging message is destined. The UE queries the list. If the UE is in the list, the UE obtains the paging message carried by the PDSCH; otherwise, the UE does not obtain the paging message.

Secondly, the monitoring of the PDCCH in paging is achieved through P-RNTI scrambling. P-RNTI is shared by all UEs. The base station configures the monitoring period, the number of paging radio frames in each period, and the number of POs in each paging radio frame. At each PO, the UE needs to detect paging.

In some embodiments, considering the multiple antennas of the NR system, it is necessary to consider multi-beam transmission and reception for paging transmission and reception.

In related art, random access in NR is implemented through a random access channel (RACH). Specifically:
1) For random access and paging, the NR system configures the relevant random access and paging parameters through broadcast message system information blocks (SIBs), base station configuration, RRC signaling, or dynamic signaling.
2) In the RACH process, the terminal first needs to send information to the base station via uplink (UL) preamble. The UL preamble sequence needs to be mapped to a portion of the UL resource blocks (RBs) and symbols, and needs to undergo IFFT processing before being sent to the base station. However, for A-IoT, devices A/B cannot actively send signals; they must rely on the sending node (e.g., the base station) to firstly send an excitation signal before the signal can be sent via reflection. In other words, A-IoT cannot actively send preamble signals. For device C, since the maximum power consumption supported by the device is no higher than 1mW or 10mW, device C cannot support complex device components, thus failing to guarantee transmission performance. Therefore, A-IoT devices cannot support or guarantee the performance of the traditional NR random access UL preamble transmission process.
3) In the RACH process, the base station needs to use the downlink (DL) PDCCH and PDSCH channels to send DL control and data information. On the receiving side, the UE needs complex receiving and transmitting components to complete detection of the PDCCH channel and demodulation and decoding of the data channel. For example, complex radio frequency receiving components, baseband processing components, local oscillators, and precise time-frequency offset synchronization modules are required. However, for A-IoT, devices A and B must rely on the excitation signal sent by the base station to reflect and transmit information. Even for device C, its receiver section is limited by low power consumption requirements and lacks complex radio frequency components such as low noise amplifiers (LNAs), mixers, intermediate frequency processing component, baseband FFT component, and IFFT component, thus making it impossible to complete the reception and processing of the PDCCH and PDSCH channels.
4) In the RACH process, for the NR system, the UE needs to obtain the UE ID and UL timing advance (TA) for subsequent accurate synchronization and communication with the base station; however, for A-IoT, due to its characteristics, it cannot achieve accurate synchronization or has no requirement for accurate synchronization; that is, for A-IoT, its random access function is also significantly different from the random access function of the NR system.
5) In the paging process, for NR systems, paging is triggered when the network has signaling or data (including system messages, emergency messages, advertising messages, etc.) that needs to be sent to the UE, and the UE is not in the RRC-connected state. At this time, the network cannot directly send data to the UE, and the network may not even know the UE's exact location. Therefore, the network needs to initiate paging. The paging action is sending a paging message by the network or base station, the paging message includes the UE ID, indicating which UE the paging message is destined for. For A-IoT, there are no multiple RRC states, and A-IoT does not need to receive various system messages of RRC configuration, emergency messages, or advertising messages. Therefore, the existing complex NR paging signaling processing flow is not suitable for A-IoT.

Based on the above issues, the current random access procedure and paging mechanism of the NR system are not suitable for A-IoT devices; therefore, further design is needed for the random access and paging of A-IoT devices. This disclosure provides a method to address the needs of low-power, low-complexity, and low-end A-IoT devices, enabling random access and paging of A-IoT devices with simple receiving and transmitting links.

The embodiments of this disclosure are described below with reference to the accompanying drawings. The information transmission method and apparatus, and communication device provided in the embodiments of this disclosure can be applied to a wireless communication system. The wireless communication system can be a system employing fifth-generation (5G) mobile communication technology (hereinafter referred to as a 5G system). Those skilled in the art will understand that the 5G NR system is merely an example and not a limitation.

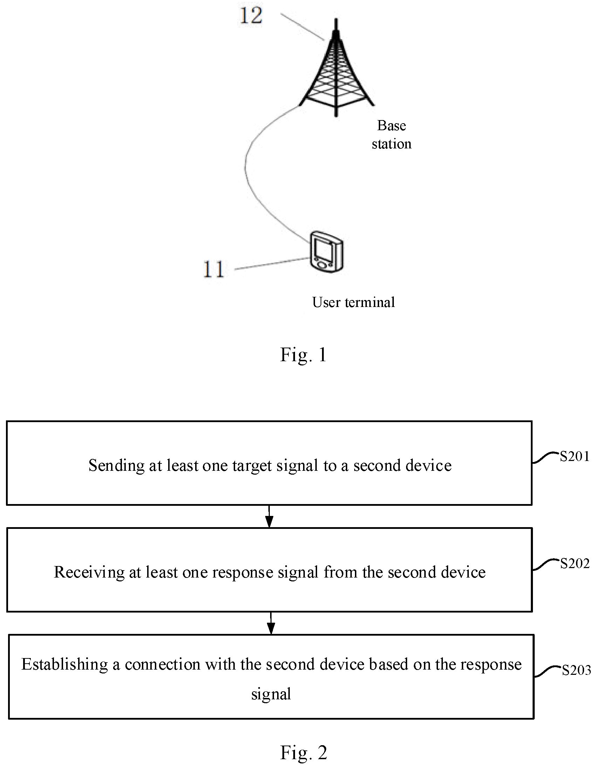

Referring to Fig. 1, which is a structural diagram of a network system to which embodiments of this disclosure are applicable, the system includes a user terminal 11 and a base station 12. The user terminal 11 can be user equipment (UE), such as a mobile phone, tablet personal computer, laptop computer, personal digital assistant (PDA), mobile Internet device (MID), or wearable device. It should be noted that the specific type of user terminal 11 is not limited in the embodiments of this disclosure. The base station 12 can be a 5G or later version base station (e.g., a next-generation Node B (gNB), 5G NR NB), or a base station in other communication systems, also referred to as a Node B. It should be noted that the embodiments of this disclosure only use a 5G base station as an example, but the specific type of base station 12 is not limited.

Embodiments of this disclosure provide an information transmission method and apparatus, and communication device to enable communication of Internet of Things (IoT) devices.

The method and the apparatus are based on the same creative concept. Since the methods and the apparatus solve problems in similar ways, for the implementation of one of the apparatus and method, reference may be made to the other of the apparatus and method, and the repeated parts will not be described again.

As shown in Fig. 2, an embodiment of the present disclosure provides an information transmission method performed by a first device, and including the following steps S201, S202 and S203.

Step S201: sending at least one target signal to a second device.

It should be noted that the second device is an Internet of Things (IoT) device, specifically an A-IoT device.

Step S202: receiving at least one response signal from the second device, the response signal being sent and/or reflected based on the at least one target signal.

In some embodiments, the response signal is obtained by the second device by decoding the target signal and finding the response signal corresponding to the target signal. The response signal is sent by the second device to the first device or reflected by the second device to the first device.

Step S203: establishing a connection with the second device based on the response signal.

It should be noted that after receiving the response signal sent or reflected by the second device, the first device can establish a communication connection with the second device based on actual needs, thereby realizing the communication process with the second device.

In some embodiments, the first device may be a network device, such as an access network device; the first device may also be a terminal, that is, a terminal that can communicate directly with the second device; the first device may also be a relay node, that is, a relay node that can communicate directly with the second device.

In some embodiments, in one implementation, sending at least one target signal to the second device includes at least one of the following A11 or A12.

A11. sending a first target signal to the second device, wherein the first target signal includes configuration information of at least one access parameter.

In some embodiments, in one implementation, the configuration information of the at least one access parameter includes at least one of the following A111 or A112.

A111. access request identification information.

In some embodiments, in one implementation, the access request identification information includes at least one of the following A1111 or A1112.

A1111. Identification information of the network accessed by the first device.

It should be noted that if the access request identification information is the identification information of the network accessed by the first device, the first terminal does not need to parse the identification information upon receiving it, and can directly execute the access process.

A1112. Identification information regarding whether the first device has accessed the network.

It should be noted that if the access request identification information is the identification information regarding whether the first device has accessed the network, the first terminal needs to parse the identification information upon receiving it. The access process will only be executed when it is parsed that access to the network is needed.

A112. access occasion configuration.

In some embodiments, in one implementation, the access occasion configuration includes at least one of the following A1121, A1122, A1123, A1124, A1125 or A1126.

A1121. time domain resource information of the network accessed by the first device.

In some embodiments, the time domain resource information includes at least one of the following: period information, time position offset information, time position start information, time position granularity information, time position end information, or time association information of the access time position relative to a reference position.

In some embodiments, the time association information of the access time position relative to the reference position includes the reference position of SSB.

A1122. frequency domain resource information of the network accessed by the first device.

In some embodiments, the frequency domain resource information includes at least one of the following: starting frequency domain position information, identification information of the starting frequency domain unit, ending frequency domain position information, identification information of the ending frequency domain unit, continuity information of the frequency domain position, identification information of the number of continuous frequency domain units, information about the starting frequency domain position relative to the reference frequency domain position, identification information of the starting frequency domain unit relative to the reference frequency domain position, information about the ending frequency domain position relative to the reference frequency domain position, identification information of the ending frequency domain unit relative to the reference frequency domain position, continuity information of the frequency domain position relative to the reference frequency domain position, or identification information of the number of continuous frequency domain units relative to the reference frequency domain position.

A1123. space domain resource information of the network accessed by the first device.

In some embodiments, the space domain resource information includes at least one of the following: beam identification information, or identification information of the beam relative to a reference beam.

A1124. code domain information of the network accessed by the first device.

In some embodiments, the code domain information includes at least one of the following: codeword identification information, or identification information of the codeword relative to a reference codeword.

A1125. sequence information of the network accessed by the first device.

In some embodiments, the sequence information includes at least one of the following: sequence configuration information, initial sequence information, sequence offset information, sequence identification information, or identification information of the sequence relative to a reference sequence.

A1126. access occasion configuration associated with a reference signal.

In some embodiments, the access occasion configuration associated with the reference signal includes: beam association information between the access occasion configuration and the SSB, and/or beam association information between the access occasion configuration and the channel state information reference signal (CSI-RS).

It should be noted that in cases where the second device is device A (i.e., the second device has no energy storage capability and no ability to independently generate signals, and transmits signals via backscattering) or device B (i.e., the second device has energy storage capability, but has no ability to independently generate signals, transmits signals via backscattering, and the stored energy can be used to amplify the power of the backscattered signal), the second device lacks information storage capability. Therefore, in some embodiments, the first device may not need to send the first target signal to such a second device. Because device C (i.e., the second device has energy storage capability and the ability to independently generate signals, and uses radio frequency devices for signal transmission) has information storage capability, in some embodiments, the first device may send the first target signal to such a second device.

A12. sending at least one second target signal to the second device, wherein the second target signal is used for instructing the second device to send the response signal, send the response signal in groups, reflect the response signal, or reflect the response signal in groups.

In some embodiments, respective response signals corresponding to different second target signals are predefined in the second device. When the second device receives the second target signal, the second device can look up the predefined correspondence between second target signals and response signals to obtain the specific response signal that needs to be sent or reflected.

In some embodiments, the first device may send the second target signal to device A, device B, and device C.

In some embodiments, in one implementation, the response signal includes at least one of the following B11, B12, B13 or B14.

B11. second device information.

In some embodiments, the second device information includes at least one of the following:
an identifier of the second device, or a group identifier of the second device.

In some embodiments, the identifier of the second device may be a temporary identifier of the second device, or an identifier assigned to the second device by the first device.

B12. acknowledgment information.

It should be noted that the acknowledgment information is used to indicate the acknowledgment feedback of the second device.

B13. uplink data information.

The uplink data information refers to the data transmitted by the second device to the first device. In some embodiments, the data may be data sensed by a sensor, a reference signal sent by the second device, or other information transmitted by the second device.

B14. first device identifier.

The first device identifier can be a temporary identifier of the first device, or a geographical location identifier of the first device.

It should be noted that since the purposes of the second target signals sent at different times may be different, the contents (at least one of B11-B14) contained in the response signals fed back by the second device may also be different. In other words, the contents contained in the response signals at different times are determined based on the second target signals, and may be the same or different.

In some embodiments, in one implementation, the target signal includes at least one of the following B101, B102, B103, B104, B105, B106, B107, B108, B109, B110, B111, B112, B113, B114, B115, B116, B117, B118, B119, B120, B121, B122, B123, or B124.

B101. excitation signal.

In some embodiments, the excitation signal represents an input signal source for the second device to reflect response information.

B102. energy harvesting signal.

In some embodiments, the energy harvesting signal represents a radio frequency signal received by the second device, which is used for radio frequency energy reception and harvesting by the second device.

B103. energy storage information.

In some embodiments, the energy storage information represents the radio frequency signal received by the second device, which is used for radio frequency energy reception and storage by the second device.

B104. information gathering indication information.

In some embodiments, the information gathering indication information includes report instruction information by which the first device instructs the second device to perform data gathering and/or information gathering in accordance with the target signal.

In some embodiments, the data gathering includes data gathering during service transmission; the information gathering includes gathering of parameters and information of the second device.

B105. reference signal transmission indication information.

In some embodiments, the reference signal transmission indication information is used to indicate a signal determined by a predefined rule and/or a signal indicated based on a query signal for assisting signal or information transmission by the second device.

In some embodiments, the reference signal, functionally speaking, includes at least one of the following: a reference signal for assisting positioning, a reference signal for assisting synchronization, or a reference signal for assisting channel estimation.

B106. synchronization information.

In some embodiments, the synchronization may include at least one of forward link synchronization, reverse link synchronization, downlink synchronization, or uplink synchronization.

In some embodiments, the synchronization information includes at least one of the following B1061 or B1062.

B1061. time synchronization between the first device and the second device.

In some embodiments, in one implementation, the time synchronization includes at least one of the following: absolute time synchronization, or relative time synchronization.

In some embodiments, the time synchronization includes at least one of radio frame synchronization, subframe synchronization, slot synchronization, symbol synchronization, or specified time unit synchronization. It should be noted that the specified time unit includes N time units, and the time unit can be at least one of radio frame, subframe, slot, symbol, millisecond, microsecond, or picosecond.

B1062. frequency synchronization between the first device and the second device.

In some embodiments, in one implementation, the frequency synchronization includes at least one of the following B10621 to B10624.

B10621. center frequency alignment.

B10622. resource element (RE) level alignment.

For example, alignment in unit of A REs.

B10623. resource block (RB) level alignment.

For example, alignment in unit of B RBs.

B10624. preset frequency unit alignment.

It should be noted that the synchronization information can indicate periodic synchronization or aperiodic synchronization, and can indicate triggered synchronization or on-demand synchronization.

B107. timing information.

In some embodiments, in one implementation, the timing information includes at least one of the following: synchronization information, timer information, or indication information of a number of time units. It should be noted that the time unit can be a time unit based on the first device, e.g., at least one symbol, or a slot, or a subframe, or a radio frame; or the time unit can be a time unit based on the second device, e.g., at least one symbol, or a slot, or a subframe, or a radio frame, or a time unit of a microprocessor; or the time unit can be an absolute time unit, e.g., a second, millisecond, microsecond, or picosecond.

B108. grouping information.

In some embodiments, in one implementation, the grouping information may include information about grouping of the second devices according to predefined rules, e.g., group identifier.

B109. function classification information.

In some embodiments, in one implementation, the function classification information includes at least one of the following B1091, B1092, B1093 or B1094.

B1091. inventory.

For example, it can be information such as outbound, inbound, shelf life, location, and the like.

B1092. sensing.

In some embodiments, sensing may include at least one of the following:
B10921. environmental monitoring, such as monitoring of temperature, humidity, wind speed, water level, smoke concentration, carbon dioxide concentration, light intensity, soil temperature, pH value, etc.;
B10922. bioinformatics monitoring, such as monitoring body temperature, exercise volume, etc.;
B10923. item information sensors, such as a second device placed on clothing to identify the color, material, shape, etc. of the clothing; information about manhole cover, for example, water level, tilt of manhole cover, vibration; and bridge information monitoring; or
B10924. parameter monitoring, such as power grid system parameter monitoring; communication system monitoring, e.g., monitoring server room, transmission line, and the like.

B1093. positioning.

In some embodiments, the positioning may include at least one of the following:
locating the second device:
finding lost item, e.g., when a second device is lost, the time and location information of the A-IoT device are reported by the surrounding UEs/RANs that support lost item positioning;
the first device obtains the absolute position of the second device; it should be noted that the method of obtaining the position depends on the positioning algorithm;
the first device obtains the relative position of the second device, for example, relative position information such as whether an item is indoors; or
second device assisted positioning: providing positioning and navigation services; for example, second devices are pre-deployed in a building as anchor points, e.g., 50,000 A-IoT devices are deployed in a 200-square-kilometer shopping mall.

B1094. command.

In some embodiments, the command may include at least one of the following:
modifying the status of a medical device (modify->normal) by sending the modification command over the network; or
activating or deactivating the second device; in some embodiments, the device is permanently deactivated.

B110. application scenario information.

In some embodiments, the application scenario information includes at least one of the following: inventory, sensing, positioning, or command.

B111. priority information.

In some embodiments, the priority information may be predefined (i.e., defined by the protocol), configured by the first device, or configured by a core network device; the priority information may be the order in which the second device reflects or directly sends response signals; for example, it may be a priority based on services, a priority based on scenarios, or a priority based on functions.

B112. access parameter configuration.

B113. access parameter information.

In some embodiments, the access parameter configuration and/or access parameter information described above includes, but is not limited to, at least one of the following: position information of the target signal (including, information about the time-frequency resource position where the first device transmits the target signal, and/or information about the time-frequency resource position where the second device receives the target signal, period information, etc.), or time-frequency resource position information of the response signal (including, information about the time-frequency domain position where the second device transmits the response signal, information about the time-frequency domain position where the first device receives the response signal, period information, etc.).

B114. paging parameter configuration.

B115. paging parameter information.

In some embodiments, the paging parameter configuration and/or paging parameter information described above includes, but is not limited to, at least one of the following: position information of the target signal (including, information about the time-frequency resource position where the first device transmits the target signal, and/or information about the time-frequency resource position where the second device receives the query signal, period information, etc.), or time-frequency resource position information of the response signal (including, information about the time-frequency domain position where the second device transmits the response signal, information about the time-frequency domain position where the first device receives the response signal, period information, etc.).

B116. first device information.

In some embodiments, the first device information includes, but is not limited to, at least one of the following: the identifier of the first device, or the geographical location information of the first device.

B117. second device information.

B118. second device grouping information.

In some embodiments, the second device grouping information includes, but is not limited to, the grouping identifier of the second device.

B119. activation signaling.

The activation signaling can be understood as activating the second device.

B120. deactivation signaling.

The deactivation signaling can be understood as deactivating the second device.

B121. threshold for the second device to reflect the response signal.

In some embodiments, the threshold for the second device to reflect the response signal can be understood as: the second device only reflects a response signal when the received power of the received signal is higher than a specified threshold.

B122. threshold for the second device to send the response signal.

In some embodiments, the threshold for the second device to send the response signal can be understood as: the second device only sends a response signal when the received power of the received signal is higher than a specified threshold.

B123. number of repetitions of target signal transmission.

B124. acknowledgment information.

In some embodiments, in one implementation, before the sending the at least one target signal to the second device, the method further includes at least one of the following C11 or C12.

C11. sending a first signal to the second device, the first signal being used by the second device to perform energy harvesting and/or energy storage.

In some embodiments, the first signal includes at least one of the aforementioned B101-B124.

C12. sending a second signal to the second device, the second signal being used by the second device for synchronization and/or timing.

In some embodiments, the first signal includes at least one of the aforementioned B101-B124.

In some embodiments, if both C11 and C12 exist, C11 is usually executed first, followed by C12.

In some embodiments, if the second device is device A, the second device can receive at least one target signal from the first device and send the response signal to the first device via backscattering; in some embodiments, before receiving the target signal, the second device can receive a second signal for synchronization and/or timing. In some embodiments, if the second device is device B, the second device can receive at least one target signal from the first device and send the response signal to the first device via backscattering; in some embodiments, before receiving the target signal, the second device can receive a first signal for energy harvesting or storage, or the second device can receive a second signal for synchronization and/or timing. In some embodiments, if the second device is device C, the second device can receive at least one target signal from the first device and send the response signal to the first device; in some embodiments, before receiving the target signal, the second device can receive a first signal for energy harvesting or storage, or the second device can receive a second signal for synchronization and/or timing.

The following illustrates the specific applications of the embodiments of this disclosure by using the communication between a base station and an A-IoT device as an example.

It should be noted that the following description uses a base station sending a query signal as an example, the query signal corresponds to the target signal mentioned above.

Application Scenario 1: The base station completes access and/or paging through at least one query signal.

Specifically, the process includes the following steps S11 to S14.

Step S11: The base station sends configuration information of at least one access parameter via a first query signal.

In some embodiments, in this case, the first query signal includes at least one of the following: the resource position where the first query signal is sent, or the resource position where the query signal is received. In some embodiments, the resource position may be defined by a protocol, or may be obtained by the base station and/or A-IoT device through calculation.

The first query signal includes at least one of the following: excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, base station information, A-IoT device information, A-IoT device grouping information, activation signaling, deactivation signaling, threshold for A-IoT device to reflect the response signal, threshold for A-IoT device to send the response signal, or acknowledgment information.

The sending nodes of the following signals can be the same or different sending nodes: the excitation signal, the energy harvesting signal, the energy storage signal, the synchronization information or timing information, and the query signal carrying other or remaining functions; for example, the sending node of the query signal carrying other functions is the first sending node, and the sending node of the excitation signal can be the second sending node.

It should be noted that the access mentioned in this disclosure is to establish a connection between the base station and the A-IoT device, enabling data and information exchange between the base station and the A-IoT device. For A-IoT devices of the types of device A and device B, the access can be initiated by the base station, i.e., the access can be initiated by the sending node of the query signal or the sending node of the excitation signal. For A-IoT devices of the type of device C, the access can be initiated by the base station, i.e., the access can be initiated by the sending node of the query signal or the sending node of the excitation signal, or the access can be initiated by the A-IoT device itself. If the access is initiated by the A-IoT device, the parameters for initiating the access by the A-IoT device are indicated by the query signal or defined by the protocol.

The connection between the base station and the A-IoT device is established by at least one of the following configurations: the base station learns the parameters and information of the A-IoT device, for example, the A-IoT identifier, the A-IoT device type, the supported function classifications, and the timing advance of the signals reflected or sent by A-IoT device; the A-IoT device learns the parameters and information of the base station, for example, the base station identifier, and in some embodiments, includes synchronization information and/or timing information, the time-frequency domain resource configuration for the A-IoT device to reflect or send the response information, and information about the time-frequency resource position where the A-IoT device receives the query signal sent by the base station.

It should be noted that the paging mentioned in this disclosure refers to paging initiated by the base station to establish a connection between the base station and the A-IoT device, enabling data and information exchange between the base station and the A-IoT device. The specifics are the same as those in the case of access, and will not be elaborated further here.

In some embodiments, this step is optional. For example, for A-IoT devices of the types of devices A and B, the A-IoT devices have no storage capability. Thus, it may not be meaningful to send configuration information to such A-IoT devices. Therefore, step S11 may be omitted for these types of A-IoT devices.

Step S12: The base station instructs, via the second query signal, the first A-IoT device or the first A-IoT device group to reflect or send a first response signal.

In some embodiments, the second query signal may be the same as the first query signal. In this case, the first query signal is not only used to send the configuration information of at least one access parameter, but also used to instruct the first A-IoT device or the first A-IoT device group to reflect or send the first response signal. In terms of the sending timing, the first query signal may be sent at the first moment, and is used to indicate steps S11 and S12 at the same time (i.e., one query signal indicates two indication contents at the same time); or the first query signal is sent at the first moment to indicate step S11 and is sent at the second moment to indicate step S12 (i.e., one query signal indicates different indication contents at different times).

It should be noted that the sending nodes of the first query signal and the second query signal can be the same or different sending nodes.

The response signal includes information responded by the A-IoT device in accordance with the indication of the second query signal. For example, the response signal includes at least one of the following: A-IoT device information, acknowledgment information, or uplink data information (i.e., data, information, and/or signals sent by the A-IoT device). In some embodiments, the A-IoT device information may, for example, be an A-IoT identifier or an A-IoT group identifier; the uplink data information includes UL transmission data transmitted by the A-IoT device, for example, data sensed by a sensor, a reference signal sent by the A-IoT device, and other information transmitted by the A-IoT device.

The resource position where the A-IoT device sends the response signal is indicated by a second query signal, or is configured by the base station (for example, for A-IoT devices of type device C), or predetermined by the protocol (indicated by predefined rules).

Step S13: The base station instructs, via a third query signal, the A-IoT device to reflect or send a second response signal.

In some embodiments, the third query signal may be the same as the first query signal. In this case, it means that the first query signal is used to send configuration information of at least one access parameter, is also used to instruct the A-IoT device or A-IoT device group to reflect or send a first response signal, and is used to instruct the A-IoT device to reflect or send a second response signal as well. In terms of the transmission timing, the first query signal may be sent at the first moment, and is used to indicate simultaneously the contents indicated by the query signals in steps S11, S12 and S13. Alternatively, the first query signal may be sent at the first moment to indicate content indicated by the query signal in step S11, sent at the second moment to indicate content indicated by the query signal in step S12, and sent at the third moment to indicate content indicated by the query signal in step S13.

In some embodiments, the third query signal may be the same as the second query signal. In this case, it means that the second query signal is used to instruct the A-IoT device or A-IoT device group to reflect or send the first response signal, and is also used to instruct the A-IoT device to reflect or send the second response signal. In terms of transmission timing, the second query signal may be sent at the first moment to simultaneously indicate contents indicated by the query signals in steps S12 and S13; or, the second query signal may be sent at the first moment to indicate content indicated by the query signal in step S12, and the second query signal may be sent at the second moment to indicate content indicated by the query signal in step S13.

The instructing the A-IoT device to reflect or send a first response signal or a second response signal may include: instructing the A-IoT device to reflect or send a first response signal, wherein the first response signal includes instructing the A-IoT device or A-IoT device group to reflect or send an acknowledgment message; the transmission timing includes at least one of the following: sending the first response signal at a fourth moment and sending the second response signal at a fifth moment; or sending the first response signal and the second response signal at a fourth moment, or sending the second response signal at a first moment.

In some embodiments, the first response signal includes at least one of the following: A-IoT device identification information, A-IoT device group identification information, identification information assigned to the A-IoT device by the base station, base station identification information, or acknowledgment information.

Step S14: The A-IoT device receives the query signal sent by the base station, and sends at least one response signal by backscatter or directly.

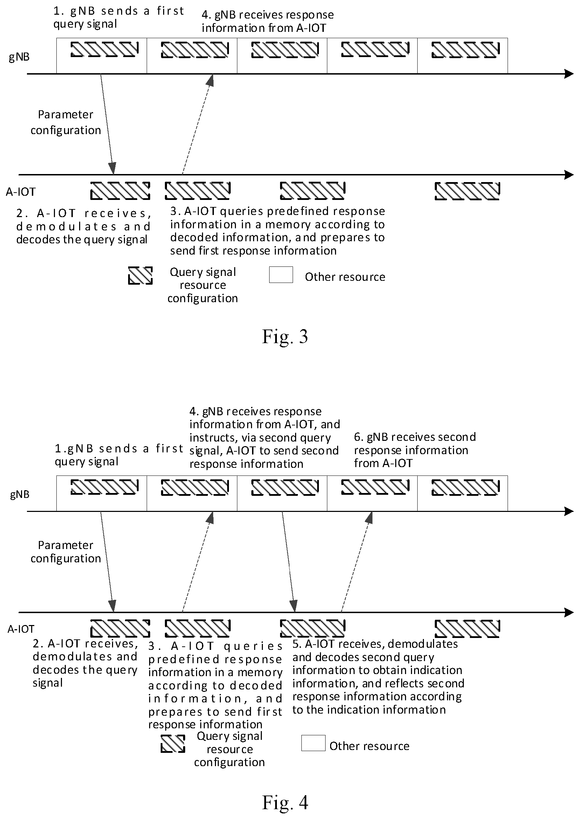

For example, as shown in Fig. 3, the specific timing sequence for access and paging employing one query signal and one response signal is as follows: the base station sends a first query signal, the A-IoT device receives the first query signal, demodulates and decodes the first query signal, the A-IoT device queries the pre-stored (predefined) response information in the memory according to the decoded information and sends a response signal to the base station, and the base station receives the response signal sent by the A-IoT device.

For example, as shown in Fig. 4, the specific timing sequence for access and paging employing multiple query signals and multiple response signals is as follows: The base station sends a first query signal; the A-IoT device receives the first query signal and demodulates and decodes the first query signal; the A-IoT device queries the pre-stored (predefined) response information in the memory based on the decoded information and sends a first response signal to the base station; the base station receives the first response signal sent by the A-IoT device and sends a second query signal to the A-IoT device to instruct the A-IoT device to send a second response signal; the A-IoT device receives the second response signal, demodulates and decodes the second response signal to obtain indication information, and reflects the second response signal based on the obtained information, and the base station receives the second response signal sent by the A-IoT device.

Application Scenario 2: The base station completes energy harvesting and/or energy storage, access and/or paging through at least one query signal.

Step S21: The base station sends a radio frequency signal through a first signal for energy harvesting and/or energy storage (or storage) of an A-IoT device.

The first signal includes at least radio frequency energy harvesting and/or energy storage.

Step S22: The base station sends configuration information of at least one access parameter through the first query signal.

In some embodiments, the first query signal may be the same as the first signal, in this case, the base station uses the first query signal to indicate energy harvesting and/or energy storage, as well as configuration information of at least one access parameter.

In some embodiments, the timing relationship between the first signal and the first query signal may include at least one of the following: sending the first signal at a first moment to indicate energy harvesting and/or storage and configuration information of at least one access parameter; or sending the first signal at a first moment to indicate energy harvesting and/or storage, and sending the first query signal at a second moment to indicate configuration information of at least one access parameter.

Step S23: The base station instructs, via the second query signal, the A-IoT device or A-IoT device group to reflect or send the first response signal.

In some embodiments, in one case, the base station uses a first signal to indicate energy harvesting and/or storage, to indicate configuration information of at least one access parameter, and to instruct an A-IoT device or A-IoT device group to reflect or send a first response signal; in some embodiments, in another case, the base station uses a first query signal to indicate configuration information of at least one access parameter and to instruct an A-IoT device or A-IoT device group to reflect or send a first response signal; in some embodiments, in another case, the base station uses a second query signal to instruct an A-IoT device or A-IoT device group to reflect or send a first response signal; specifically, the transmission timing is the same as that in the first application scenario and will not be repeated here.

Step S24: The base station instructs, via a third query signal, the A-IoT device to reflect or send a second response signal, including acknowledgment information.

For details on the implementation process, please refer to Application Scenario 1, which will not be elaborated here.

Step S25: The A-IoT device receives the query signal sent by the base station and sends at least one response signal through backscatter.

For details on the implementation process, please refer to Application Scenario 1, which will not be elaborated here.

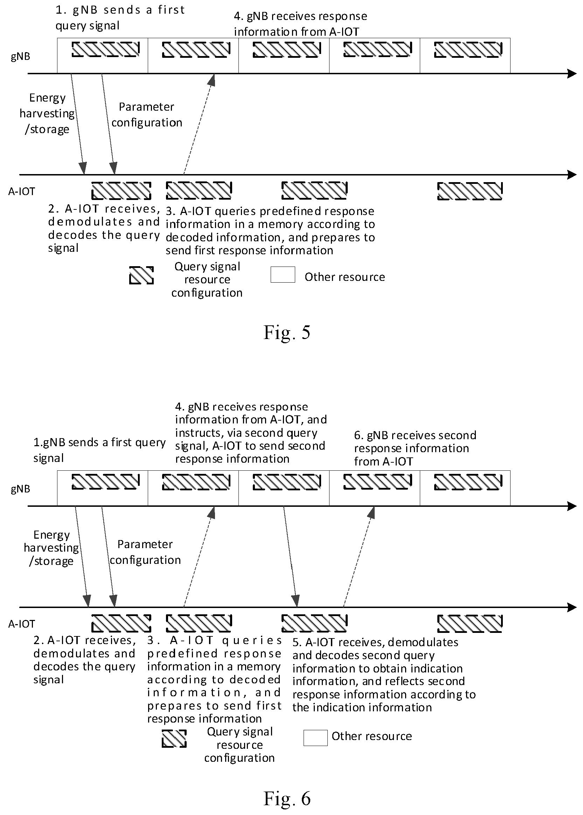

For example, as shown in Fig. 5, the specific timing sequence for access and paging employing one query signal and one response signal is as follows: the base station sends a first query signal for energy harvesting or storage and including configuration information of at least one access parameter; the A-IoT device receives the first query signal and demodulates and decodes the first query signal; the A-IoT device queries the pre-stored (predefined) response information in the memory based on the decoded information and sends a response signal to the base station; the base station receives the response signal sent by the A-IoT device.

For example, as shown in Fig. 6, the specific timing sequence for access and paging employing multiple query signals and multiple response signals is as follows: the base station sends a first query signal for energy harvesting or storage and including configuration information of at least one access parameter; the A-IoT device receives the first query signal and demodulates and decodes the first query signal; the A-IoT device queries the pre-stored (predefined) response information in the memory according to the decoded information and sends a first response signal to the base station; the base station receives the first response signal sent by the A-IoT device and sends a second query signal to the A-IoT device, instructing the A-IoT device to send a second response signal; the A-IoT device receives the second response signal, demodulates and decodes the second response signal to obtain indication information, and reflects the second response signal according to the obtained information; and the base station receives the second response signal sent by the A-IoT device.

Application Scenario 3: The base station completes synchronization, access, and paging through at least one query signal.

Step S31: The base station uses a second signal for A-IoT device synchronization or timing.

The second signal includes at least A-IoT device synchronization and/or timing.

Step S32: The base station sends configuration information of at least one access parameter through the first query signal.

In some embodiments, the first query signal may be the same as the second signal. In this case, the base station uses the first query signal to indicate the A-IoT device synchronization and/or timing, as well as to indicate configuration information of at least one access parameter.

Step S33: The base station instructs, via the second query signal, the A-IoT device or the A-IoT device group to reflect or send the first response signal.

For details on the implementation process, please refer to Application Scenario 1, which will not be elaborated here.

Step S34: The base station instructs, via a third query signal, the A-IoT device to reflect or send a second response signal, including acknowledgment information.

For details on the implementation process, please refer to Application Scenario 1, which will not be elaborated here.

Step S35: The A-IoT device receives the query signal sent by the base station and sends at least one response signal by backscatter or directly sends at least one response signal.

For details on the implementation process, please refer to Application Scenario 1, which will not be elaborated here.

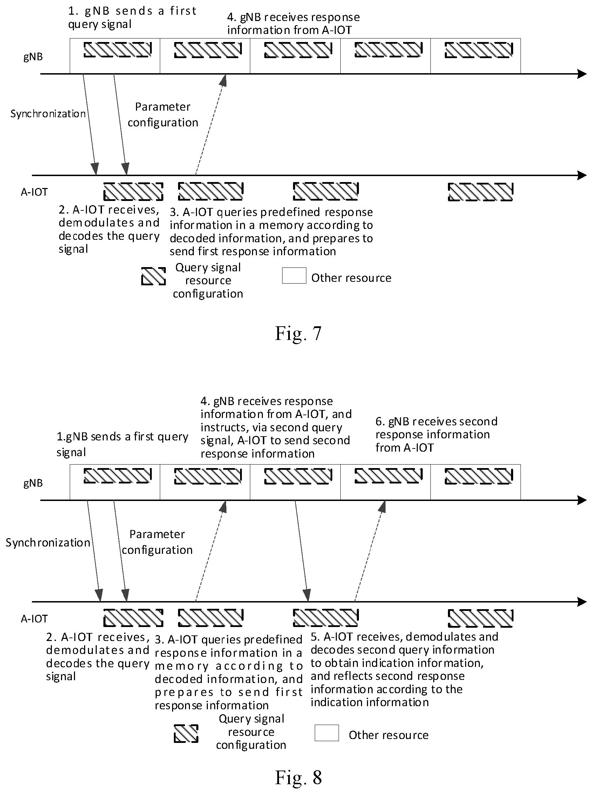

For example, as shown in Fig. 7, the specific timing sequence for access and paging employing one query signal and one response signal is as follows: the base station sends a first query signal for A-IoT device synchronization or timing and including configuration information of at least one access parameter; the A-IoT device receives the first query signal and demodulates and decodes the first query signal; the A-IoT device queries the pre-stored (predefined) response information in the memory according to the decoded information and sends a response signal to the base station; the base station receives the response signal sent by the A-IoT device.

For example, as shown in Fig. 8, the specific timing sequence for access and paging employing multiple query signals and multiple response signals is as follows: the base station sends a first query signal for A-IoT device synchronization or timing and including configuration information of at least one access parameter; the A-IoT device receives the first query signal and demodulates and decodes the first query signal; the A-IoT device queries the pre-stored (predefined) response information in the memory according to the decoded information and sends a first response signal to the base station; the base station receives the first response signal sent by the A-IoT device and sends a second query signal to the A-IoT device, instructing the A-IoT device to send a second response signal; the A-IoT device receives the second response signal, demodulates and decodes the second response signal to obtain indication information, and reflects the second response signal according to the obtained information; and the base station receives the second response signal sent by the A-IoT device.

Application Scenario 4: The base station completes energy harvesting and/or energy storage, synchronization, access, and paging through at least one query signal.

Step S41: The base station transmits a radio frequency signal through the first signal for energy harvesting and/or energy storage of an A-IoT device.

Step S42: The base station transmits a radio frequency signal through the second signal for synchronization or timing of an A-IoT device.

Step S43: The base station sends configuration information of at least one access parameter through the first query signal.

Step S44: The base station instructs, via the second query signal, the A-IoT device or the A-IoT device group to reflect or send the first response signal.

Step S45: The base station instructs, via a third query signal, the A-IoT device to reflect or send a second response signal, including acknowledgment information.

Step S46: The A-IoT device receives at least one query signal sent by the base station and sends response information through backscatter or sends a response signal.

It should be noted that this application scenario is a combination of the application scenario 1, the application scenario 2, and the application scenario 3, and will not be elaborated further here.

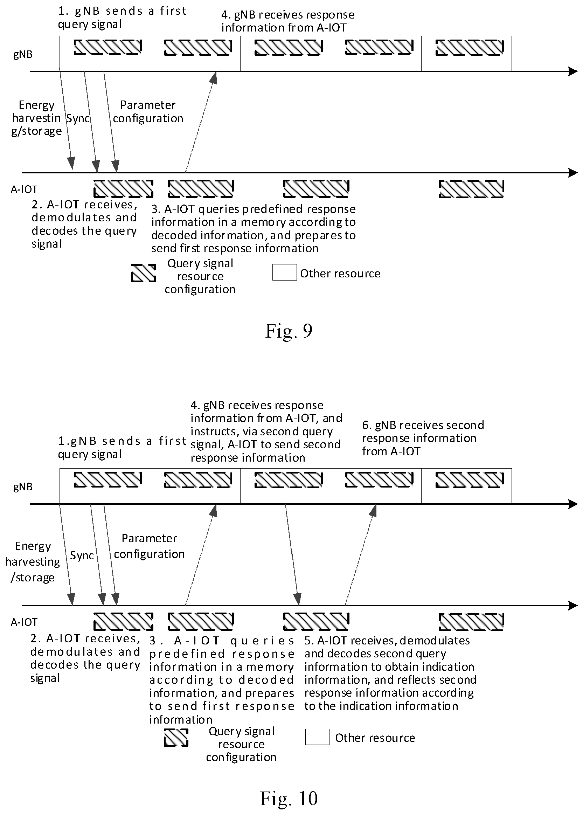

For example, as shown in Fig. 9, the specific timing sequence for access and paging employing one query signal and one response signal is as follows: the base station sends a first query signal for energy harvesting or storage, A-IoT device synchronization or timing, and including configuration information of at least one access parameter. The A-IoT device receives the first query signal, demodulates and decodes the first query signal, queries the pre-stored (predefined) response information in the memory according to the decoded information, and sends a response signal to the base station. The base station receives the response signal sent by the A-IoT device.

For example, as shown in Fig. 10, the specific timing sequence for access and paging employing multiple query and response signals is as follows: the base station sends a first query signal for energy harvesting or storage, A-IoT device synchronization or timing, and including configuration information of at least one access parameter. The A-IoT device receives the first query signal, demodulates and decodes the first query signal, queries the pre- stored (predefined) response information in the memory based on the decoded information, and sends a first response signal to the base station. The base station receives the first response signal sent by the A-IoT device and sends a second query signal to the A-IoT device, instructing the A-IoT device to send a second response signal. The A-IoT device receives the second response signal, demodulates and decodes the second response signal to obtain indication information, and reflects the second response signal based on the obtained information, and the base station receives the second response signal sent by the A-IoT device.

In summary, the embodiments of this disclosure can establish an association between the first device and the A-IoT device through at least one information interaction involving the target signal of the first device and the reflected response signal of the A-IoT device, obtain parameter information of the first device, e.g., timing and identification information, and data transmission information, and obtain parameters and information of the A-IoT device, e.g., timing and identification information, thereby ensuring that data transmission can be performed between the first device and the A-IoT device to realize communication of IoT devices.

The technical solutions provided in the embodiments of this disclosure are applicable to a variety of systems, especially 5G systems. For example, applicable systems may include Global System for Mobile Communication (GSM), Code Division Multiple Access (CDMA), Wideband Code Division Multiple Access (WCDMA) General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G New Radio (NR). All of these systems include a terminal (also referred to as terminal device) and a network device. The systems may also include a core network component, such as Evolved Packet System (EPS) and 5G System (5GS).

The terminal involved in the embodiments of this disclosure, also referred to as a terminal device, can be a device that provides voice and/or data connectivity to a user, a handheld device with wireless connectivity, or other processing devices connected to a wireless modem. The name of the terminal device may differ in different systems; for example, in a 5G system, the terminal device may be called user equipment (UE). The wireless terminal device can communicate with one or more core networks (CNs) via a radio access network (RAN). The wireless terminal device can be a mobile terminal device, such as a mobile phone (or "cellular" phone) and a computer with a mobile terminal device, for example, a portable, pocket-sized, handheld, computer-embedded, or vehicle-mounted mobile device, which exchanges voice and/or data with the radio access network. Examples include Personal Communication Service (PCS) phones, cordless phones, Session Initiated Protocol (SIP) phones, Wireless Local Loop (WLL) stations, Personal Digital Assistants (PDAs), and other devices. Wireless terminal device can also be referred to as a system, subscriber unit, subscriber station, mobile station, mobile, remote station, access point, remote terminal, access terminal, user terminal, user agent, or user device, but the embodiments of this disclosure are not limited thereto.

The network device involved in the embodiments of this disclosure can be a base station, which may include multiple cells providing services to terminals. Depending on the specific application, the base station may also be called an access point, or a device in the access network that communicates with the wireless terminal device through one or more sectors on the air interface, or other names. The network device can be used to exchange received air frames with Internet Protocol (IP) packets, acting as a router between the wireless terminal device and the rest of the access network, where the rest of the access network may include an Internet Protocol (IP) communication network. The network device can also coordinate the attribute management of the air interface. For example, the network device involved in this disclosure can be a base transceiver station (BTS) in a Global System for Mobile communications (GSM) or Code Division Multiple Access (CDMA) system, a NodeB in a wide-band Code Division Multiple Access (WCDMA) system, an evolved Node B (eNB or e-NodeB) in a long term evolution (LTE) system, a 5G base station (gNB) in a next generation system, a Home evolved Node B (HeNB), a relay node, a femto, a pico, etc., and is not limited in this disclosure. In some network structures, the network device may include a centralized unit (CU) and a distributed unit (DU), and the centralized unit and distributed unit may be geographically separated.

Network devices and terminal devices can each use one or more antennas for multiple-input multiple-output (MIMO) transmission. MIMO transmission can be single-user MIMO (SU-MIMO) or multiple-user MIMO (MU-MIMO). Depending on the configuration and number of antenna combinations, MIMO transmission can be two-dimensional MIMO (2D-MIMO), three-dimensional MIMO (3D-MIMO), full-dimensional MIMO (FD-MIMO), or massive-MIMO, and can also be diversity transmission, pre-coded transmission, or beamforming transmission, etc.

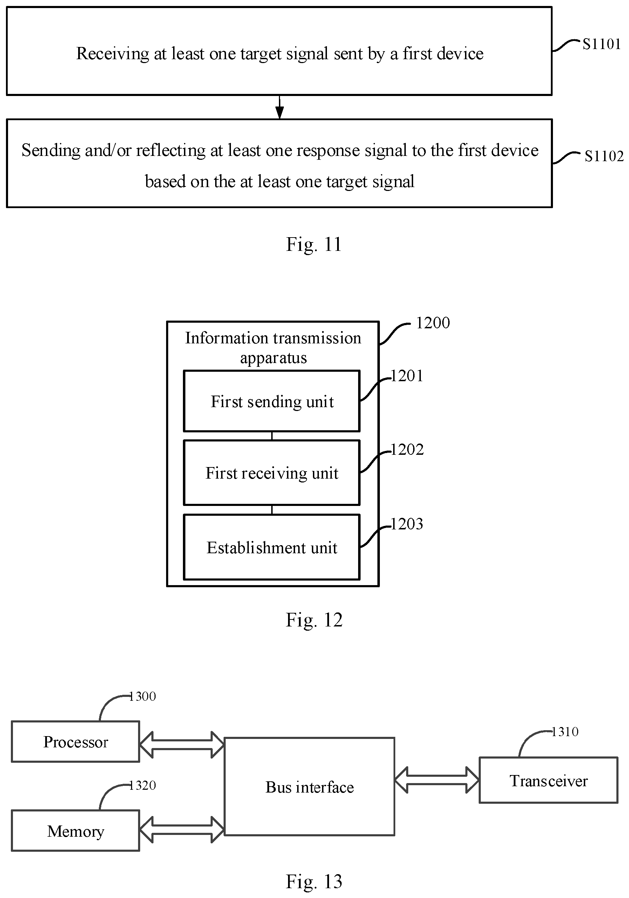

As shown in Fig. 11, an embodiment of the present disclosure provides an information transmission method, performed by a second device, including:
Step S1101: receiving at least one target signal sent by a first device; and
Step S1102: sending and/or reflecting at least one response signal to the first device based on the at least one target signal;
wherein the second device is an Internet of Things (IoT) device.

In some embodiments, receiving at least one target signal sent by the first device includes at least one of the following:
receiving a first target signal sent by the first device, wherein the first target signal includes configuration information of at least one access parameter; or
receiving a second target signal sent by the first device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, sending and/or reflecting at least one response signal to the first device based on the at least one target signal includes:
obtaining the response signal corresponding to the target signal based on the received target signal; and
sending and/or reflecting the response signal to the first device.

In some embodiments, before receiving at least one target signal sent by the first device, the method further includes at least one of the following:
receiving a first signal sent by the first device, the first signal being used by the second device to perform energy harvesting and/or energy storage; or
receiving a second signal sent by the first device, the second signal being used by the second device for synchronization and/or timing.

It should be noted that all the implementations of the above embodiments are applicable to the embodiments of the information transmission method performed by the second device, and can achieve the same technical effect, so they will not be described again here.

As shown in Fig. 12, an embodiment of the present disclosure provides an information transmission apparatus 1200, applied to a first device, including:
a first sending unit 1201, configured to send at least one target signal to a second device;
a first receiving unit 1202, configured to receive at least one response signal from the second device, the response signal being sent and/or reflected based on the at least one target signal; and
an establishment unit 1203, configured to establish a connection with the second device based on the response signal;
wherein the second device is an Internet of Things (IoT) device.

In some embodiments, the first sending unit 1201 is configured to perform at least one of the following:
sending a first target signal to the second device, wherein the first target signal includes configuration information of at least one access parameter; or
sending at least one second target signal to the second device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, before the first sending unit 1201 sends at least one target signal to the second device, the apparatus further includes at least one of the following:
a third sending unit, configured to send a first signal to the second device, the first signal being used by the second device to perform energy harvesting and/or energy storage; or
a fourth sending unit, configured to send a second signal to the second device, the second signal being used by the second device for synchronization and/or timing.

It should be noted that this apparatus embodiment corresponds one-to-one with the above method embodiments. All implementations of the above method embodiments are applicable to the apparatus embodiment and can achieve the same technical effect.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related art, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program codes, such as USB flash drives, portable hard drives, read-only memory (ROM), random access memory (RAM), magnetic disks, or optical discs.

As shown in Fig. 13, an embodiment of the present disclosure also provides a first device, including a processor 1300, a transceiver 1310, a memory 1320, and a program stored in the memory 1320 and executable on the processor 1300; wherein the transceiver 1310 is connected to the processor 1300 and the memory 1320 via a bus interface, wherein the processor 1300 is used for reading the program in the memory and execute the following process:
sending at least one target signal to a second device via the transceiver;
receiving at least one response signal from the second device, the response signal being sent and/or reflected based on the at least one target signal; and
establishing a connection with the second device based on the response signal;
wherein the second device is an Internet of Things (IoT) device.

The transceiver 1310 is used for receiving and sending data under the control of the processor 1300.

In Fig. 13, the bus architecture may include any number of interconnected buses and bridges, specifically linking various circuits of one or more processors represented by processor 1300 and memory represented by memory 1320. The bus architecture may also link various other circuits such as peripheral devices, voltage regulators, and power management circuits, which are well known in the art and therefore will not be described further herein. The bus interface provides an interface. The transceiver 1310 may be multiple components, including a transmitter and a receiver, providing a unit for communicating with various other devices over a transmission medium, including wireless channels, wired channels, optical fibers, etc. For different user equipment, the user interface 1330 may also be an interface capable of connecting required devices externally or internally, including but not limited to keypads, displays, speakers, microphones, joysticks, etc.

The processor 1300 is responsible for managing the bus architecture and general processing, while the memory 1320 can store the data used by the processor 1300 when performing operations.

In some embodiments, the processor 1300 may be a central processing unit (CPU), an application-specific integrated circuit (ASIC), a field-programmable gate array (FPGA), or a complex programmable logic device (CPLD), and the processor may also adopt a multi-core architecture.

The processor executes any of the methods described in the embodiments of this disclosure by invoking a computer program stored in the memory, according to the obtained executable instructions. The processor and the memory may also be physically separated.

In some embodiments, the processor is used for reading the computer program from the memory and performing at least one of the following steps:
sending a first target signal to the second device, wherein the first target signal includes configuration information of at least one access parameter; or
sending at least one second target signal to the second device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, the processor is used for reading the computer program from the memory and performing at least one of the following steps:
sending a first signal to the second device, the first signal being used by the second device to perform energy harvesting and/or energy storage; or
sending a second signal to the second device, the second signal being used by the second device for synchronization and/or timing.

It should be noted that the first device provided in this embodiment can implement all the method steps implemented in the above method embodiment and can achieve the same technical effect. Therefore, the parts and beneficial effects that are the same as those in the method embodiment will not be described in detail here.

An embodiment of this disclosure further provides a computer-readable storage medium storing a computer program thereon, wherein the computer program, when executed by a processor, implements the steps of the information transmission method performed by a first device. The processor-readable storage medium can be any available medium or data storage device accessible to the processor, including but not limited to magnetic storage (e.g., floppy disk, hard disk, magnetic tape, magneto-optical disk (MO), etc.), optical storage (e.g., compact disc (CD), digital video disc (DVD), Blu-ray disc (BD), high-definition versatile disc (HVD), etc.), and semiconductor storage (e.g., ROM, erasable programmable read-only memory (EPROM), electrically erasable programmable read-only memory (EEPROM), non-volatile memory (NAND FLASH), solid-state drives (SSDs), etc.).

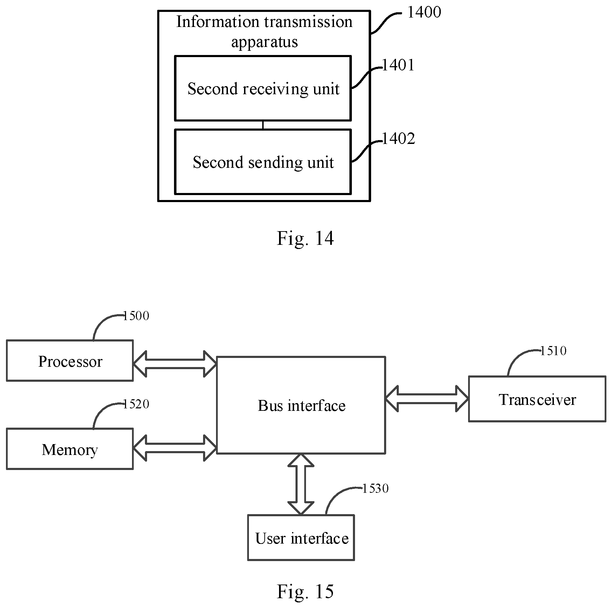

As shown in Fig. 14, an embodiment of the present disclosure provides an information transmission apparatus 1400, applied to a second device, including:
a second receiving unit 1401, configured to receive at least one target signal sent by a first device;
a second sending unit 1402, configured to send and/or reflect at least one response signal to the first device according to the at least one target signal;
wherein the second device is an Internet of Things (IoT) device.

In some embodiments, the second receiving unit 1401 is configured to perform at least one of the following:
receiving a first target signal sent by the first device, wherein the first target signal includes configuration information of at least one access parameter; or
receiving a second target signal sent by the first device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, sending and/or reflecting at least one response signal to the first device based on the at least one target signal includes:
obtaining the response signal corresponding to the target signal based on the received target signal; and
sending and/or reflecting the response signal to the first device.

In some embodiments, before the second receiving unit 1401 receives at least one target signal sent by the first device, the apparatus further includes at least one of the following:
a third receiving unit, configured to receive a first signal sent by the first device, the first signal being used by the second device to perform energy harvesting and/or energy storage; or
a fourth receiving unit, configured to receive a second signal sent by the first device, the second signal being used by the second device for synchronization and/or timing.

It should be noted that the apparatus embodiment corresponds one-to-one with the above method embodiments. All implementations of the above method embodiments are applicable to the apparatus embodiment and can achieve the same technical effect.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related art, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

As shown in Fig. 15, an embodiment of the present disclosure also provides a second device, including a processor 1500, a transceiver 1510, a memory 1520, and a program stored in the memory 1520 and executable on the processor 1500; wherein the transceiver 1510 is connected to the processor 1500 and the memory 1520 via a bus interface, and the processor 1500 is used for reading the program in the memory and execute the following processes:
receiving, via the transceiver, at least one target signal sent by a first device; and
sending and/or reflecting at least one response signal to the first device based on the at least one target signal;
wherein the second device is an Internet of Things (IoT) device.

The transceiver 1510 is used for receiving and sending data under the control of the processor 1500.

In Fig. 15, the bus architecture may include any number of interconnected buses and bridges, specifically linking various circuits of one or more processors represented by processor 1500 and memory represented by memory 1520. The bus architecture may also link various other circuits such as peripheral devices, voltage regulators, and power management circuits, which are well known in the art and therefore will not be described further herein. The bus interface provides an interface. The transceiver 1510 may be multiple components, including a transmitter and a receiver, providing a unit for communicating with various other devices over a transmission medium, including wireless channels, wired channels, optical fibers, etc. For different user equipment, the user interface 1530 may also be an interface capable of connecting required devices externally or internally, including but not limited to keypads, displays, speakers, microphones, joysticks, etc.

The processor 1500 is responsible for managing the bus architecture and general processing, while the memory 1520 can store the data used by the processor 1500 when performing operations.

In some embodiments, the processor 1500 may be a CPU, ASIC, FPGA or CPLD, and the processor may also adopt a multi-core architecture.

The processor executes any of the methods described in the embodiments of this disclosure by invoking a computer program stored in the memory, according to the obtained executable instructions. The processor and the memory may also be physically separated.

In some embodiments, the processor is used for reading the computer program from the memory and performing at least one of the following steps:
receiving a first target signal sent by the first device, wherein the first target signal includes configuration information of at least one access parameter; or
receiving a second target signal sent by the first device, wherein the second target signal is used for instructing the second device to send the response signal, send the response signal in groups, reflect the response signal, or reflect the response signal in groups.

In some embodiments, the configuration information of the at least one access parameter includes at least one of the following:
access request identification information; or
access occasion configuration.

In some embodiments, the access occasion configuration includes at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

In some embodiments, the response signal includes at least one of the following:
second device information, acknowledgment information, uplink data information, or a first device identifier.

In some embodiments, the second device information includes at least one of the following:
an identifier of the second device, or a group identifier of the second device.

In some embodiments, the target signal includes at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

In some embodiments, the synchronization information includes at least one of the following:
time synchronization between the first device and the second device; or
frequency synchronization between the first device and the second device.

In some embodiments, sending and/or reflecting at least one response signal to the first device based on the at least one target signal includes:
obtaining the response signal corresponding to the target signal based on the received target signal; and
sending and/or reflecting the response signal to the first device.

In some embodiments, the processor is used for reading the computer program from the memory and performing at least one of the following steps:
receiving a first signal sent by the first device, the first signal being used by the second device to perform energy harvesting and/or energy storage; or
receiving a second signal sent by the first device, the second signal being used by the second device for synchronization and/or timing.

It should be noted that the second device provided in the embodiment of this disclosure can implement all the method steps implemented in the above method embodiment and achieve the same technical effect. Therefore, the parts and beneficial effects that are the same as those in the method embodiment will not be described in detail here.

An embodiment of this disclosure further provides a computer-readable storage medium storing a computer program thereon, wherein the computer program, when executed by a processor, implements the steps of the information transmission method performed by a second device. The processor-readable storage medium can be any available medium or data storage device accessible to the processor, including but not limited to magnetic storage (e.g., floppy disks, hard disks, magnetic tapes, magneto-optical disks (MO), etc.), optical storage (e.g., CDs, DVDs, BDs, HVDs, etc.), and semiconductor storage (e.g., ROMs, EPROMs, EEPROMs, non-volatile memory (NAND flash), solid-state drives (SSDs)).

An embodiment of this disclosure further provides a computer program product, including computer instructions. When executed by a processor, the computer instructions implement the various processes of the above-described method embodiments and achieve the same technical effects. To avoid repetition, further details are omitted here.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program codes.

This disclosure is described with reference to flowchart illustrations and/or block diagrams of methods, devices (systems), and computer program products according to embodiments of this disclosure. It will be understood that each flow and/or block of the flowcharts and/or block diagrams, and combinations of flows and/or blocks in the flowcharts and/or block diagrams, can be implemented by computer-executable instructions. These computer-executable instructions can be provided to a general-purpose computer, special-purpose computer, embedded processor, or a processor of other programmable data processing device to produce a machine, such that the instructions, which are executed by the processor of the computer or other programmable data processing device, create means for implementing the functions specified in one or more flows of the flowcharts and/or one or more blocks of the block diagrams.

These processor-executable instructions may also be stored in a processor-readable memory that can instruct a computer or other programmable data processing device to operate in a particular manner, such that the instructions stored in the processor-readable memory produce an article of manufacture including instruction means, the instruction means implement the functions specified in one or more flows of the flowcharts and/or one or more blocks of the block diagrams.

These processor-executable instructions can also be loaded onto a computer or other programmable data processing device to cause a series of operational steps to be performed on the computer or other programmable device to produce a computer-implemented process, such that the instructions, which are executed on the computer or other programmable device, provide steps for implementing the functions specified in one or more flows of the flowcharts and/or one or more blocks of the block diagrams.

Furthermore, it should be noted that in the apparatus and method of this disclosure, it is obvious that the components or steps can be decomposed and/or recombined. These decompositions and/or re-combinations should be considered equivalent solutions of this disclosure. Moreover, the steps performing the above series of processes can naturally be executed in the order described, but are not necessarily required to be executed in chronological order; some steps can be executed in parallel or independently of each other. Those skilled in the art will understand that all or any step or component of the method and apparatus of this disclosure can be implemented in any computing device (including processors, storage media, etc.) or network of computing devices, in hardware, firmware, software, or a combination thereof, which can be achieved by those skilled in the art using their basic programming skills after reading the description of this disclosure.

It should be noted that the above division of modules is merely a logical functional division. In actual implementation, they can be fully or partially integrated into a single physical entity, or they can be physically separated. Furthermore, these modules can be implemented entirely in software called by a processing element; they can be fully implemented in hardware; or some modules can be implemented in software called by processing element, while others are implemented in hardware. For example, a module can be a separate processing element, or it can be integrated into a chip in the aforementioned device. Alternatively, it can be stored as program code in the memory of the aforementioned device, and its function can be called and executed by a processing element of the device. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be implemented through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented by using program codes called by a processing element, the processing element can be a general-purpose processor, such as a CPU or other processor capable of calling program codes. Furthermore, these modules can be integrated together to implement a system-on-a-chip (SOC).

The terms "first", "second" and the like in the specification and the claims of this disclosure are used to distinguish similar objects and are not necessarily used to describe a specific order or sequence. It should be understood that such data can be interchanged where appropriate so that embodiments of this disclosure described herein may be implemented in orders other than those illustrated or described herein. Furthermore, the terms "including" and "having", and any variations thereof, are intended to cover non-exclusive inclusion; for example, a process, method, system, product, or apparatus that includes a series of steps or units is not necessarily limited to those steps or units explicitly listed, but may include other steps or units not explicitly listed or inherent in such processes, methods, products, or apparatus. Additionally, the use of "and/or" in the specification and claims indicates at least one of the connected objects, such as A and/or B and/or C, indicating seven possibilities: A alone, B alone, C alone, and both A and B, both B and C, both A and C, and A, B, and C. Similarly, the use of "at least one of A or B" in this specification and claims should be understood as "A alone, B alone, or both A and B".

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. An information transmission method, performed by a first device, comprising:
sending at least one target signal to a second device;
receiving at least one response signal from the second device, the response signal being sent and/or reflected based on the at least one target signal; and
establishing a connection with the second device based on the response signal;
wherein the second device is an Internet of Things (IoT) device.

2. The method according to claim 1, wherein the sending the at least one target signal to the second device comprises at least one of the following:
sending a first target signal to the second device, wherein the first target signal comprises configuration information of at least one access parameter; or
sending at least one second target signal to the second device, wherein the second target signal is used for instructing the second device to send the response signal, send the response signal in groups, reflect the response signal, or reflect the response signal in groups.

3. The method according to claim 2, wherein the configuration information of the at least one access parameter comprises at least one of the following:
access request identification information; or
access occasion configuration.

4. The method according to claim 3, wherein the access occasion configuration comprises at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

5. The method according to claim 1, wherein the response signal comprises at least one of the following:
second device information, acknowledgment information, uplink data information, or a first device identifier.

6. The method according to claim 5, wherein the second device information comprises at least one of the following:
an identifier of the second device, or a group identifier of the second device.

7. The method according to claim 1, wherein the target signal comprises at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

8. The method according to claim 7, wherein the synchronization information comprises at least one of the following:
time synchronization between the first device and the second device; or
frequency synchronization between the first device and the second device.

9. The method according to any one of claims 1 to 8, wherein, before the sending the at least one target signal to the second device, the method further comprises at least one of the following:
sending a first signal to the second device, the first signal being used by the second device to perform energy harvesting and/or energy storage; or
sending a second signal to the second device, the second signal being used by the second device for synchronization and/or timing.

10. An information transmission method, performed by a second device, comprising:
receiving at least one target signal sent by a first device; and
sending and/or reflecting at least one response signal to the first device based on the at least one target signal;
wherein the second device is an Internet of Things (IoT) device.

11. The method according to claim 10, wherein the receiving the at least one target signal sent by the first device comprises at least one of the following:
receiving a first target signal sent by the first device, wherein the first target signal comprises configuration information of at least one access parameter; or
receiving a second target signal sent by the first device, wherein the second target signal is used for instructing the second device to send the response signal, send the response signal in groups, reflect the response signal, or reflect the response signal in groups.

12. The method according to claim 11, wherein the configuration information of the at least one access parameter comprises at least one of the following:
access request identification information; or
access occasion configuration.

13. The method according to claim 12, wherein the access occasion configuration comprises at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

14. The method according to claim 10, wherein the response signal comprises at least one of the following:
second device information, acknowledgment information, uplink data information, or a first device identifier.

15. The method according to claim 14, wherein the second device information comprises at least one of the following:
an identifier of the second device, or a group identifier of the second device.

16. The method according to claim 10, wherein the target signal comprises at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

17. The method according to claim 16, wherein the synchronization information comprises at least one of the following:
time synchronization between the first device and the second device; or
frequency synchronization between the first device and the second device.

18. The method according to claim 10, wherein the sending and/or reflecting the at least one response signal to the first device based on the at least one target signal comprises:
obtaining the response signal corresponding to the target signal based on the received target signal; and
sending and/or reflecting the response signal to the first device.

19. The method according to any one of claims 10 to 18, wherein, before the receiving the at least one target signal sent by the first device, the method further comprises at least one of the following:
receiving a first signal sent by the first device, the first signal being used by the second device to perform energy harvesting and/or energy storage; or
receiving a second signal sent by the first device, the second signal being used by the second device for synchronization and/or timing.

20. A communication device, wherein the communication device is a first device, and comprises a memory, a transceiver, and a processor;
the memory is used for storing a computer program; the transceiver is used for sending and receiving data under the control of the processor; and the processor is used for reading the computer program from the memory and performing the following steps:
sending at least one target signal to a second device via the transceiver;
receiving at least one response signal from the second device, the response signal being sent and/or reflected based on the at least one target signal; and
establishing a connection with the second device based on the response signal;
wherein the second device is an Internet of Things (IoT) device.

21. The communication device according to claim 20, wherein the processor is used for reading the computer program from the memory and performing at least one of the following steps:
sending a first target signal to the second device, wherein the first target signal comprises configuration information of at least one access parameter; or
sending at least one second target signal to the second device, wherein the second target signal is used for instructing the second device to send the response signal, send the response signal in groups, reflect the response signal, or reflect the response signal in groups.

22. The communication device according to claim 21, wherein the configuration information of the at least one access parameter comprises at least one of the following:
access request identification information; or
access occasion configuration.

23. The communication device according to claim 22, wherein the access occasion configuration comprises at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

24. The communication device according to claim 20, wherein the response signal comprises at least one of the following:
second device information, acknowledgment information, uplink data information, or a first device identifier.

25. The communication device according to claim 24, wherein the second device information comprises at least one of the following:
an identifier of the second device, or a group identifier of the second device.

26. The communication device according to claim 20, wherein the target signal comprises at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

27. The communication device according to claim 26, wherein the synchronization information comprises at least one of the following:
time synchronization between the first device and the second device; or
frequency synchronization between the first device and the second device.

28. The communication device according to any one of claims 20 to 27, wherein the processor is used for reading the computer program from the memory and performing at least one of the following steps:
sending a first signal to the second device, the first signal being used by the second device to perform energy harvesting and/or energy storage; or
sending a second signal to the second device, the second signal being used by the second device for synchronization and/or timing.

29. A communication device, wherein the communication device is a second device, and comprises a memory, a transceiver, and a processor;
the memory is used for storing a computer program; the transceiver is used for sending and receiving data under the control of the processor; and the processor is used for reading the computer program from the memory and performing the following steps:
receiving at least one target signal sent by a first device via the transceiver; and
sending and/or reflecting at least one response signal to the first device based on the at least one target signal;
wherein the second device is an Internet of Things (IoT) device.

30. The communication device according to claim 29, wherein the processor is used for reading the computer program from the memory and performing at least one of the following steps:
receiving a first target signal sent by the first device, wherein the first target signal comprises configuration information of at least one access parameter; or
receiving a second target signal sent by the first device, wherein the second target signal is used for instructing the second device to send the response signal, send the response signal in groups, reflect the response signal, or reflect the response signal in groups.

31. The communication device according to claim 30, wherein the configuration information of the at least one access parameter comprises at least one of the following:
access request identification information; or
access occasion configuration.

32. The communication device according to claim 31, wherein the access occasion configuration comprises at least one of the following:
time domain resource information of a network accessed by the first device;
frequency domain resource information of the network accessed by the first device;
space domain resource information of the network accessed by the first device;
code domain information of the network accessed by the first device;
sequence information of the network accessed by the first device; or
access occasion configuration associated with a reference signal.

33. The communication device according to claim 29, wherein the response signal comprises at least one of the following:
second device information, acknowledgment information, uplink data information, or a first device identifier.

34. The communication device according to claim 33, wherein the second device information comprises at least one of the following:
an identifier of the second device, or a group identifier of the second device.

35. The communication device according to claim 29, wherein the target signal comprises at least one of the following:
excitation signal, energy harvesting signal, energy storage information, information gathering indication information, reference signal transmission indication information, synchronization information, timing information, grouping information, function classification information, application scenario information, priority information, access parameter configuration, access parameter information, paging parameter configuration, paging parameter information, first device information, second device information, second device grouping information, activation signaling, deactivation signaling, threshold for the second device to reflect the response signal, threshold for the second device to send the response signal, number of repetitions of target signal transmission, or acknowledgment information.

36. The communication device according to claim 35, wherein the synchronization information comprises at least one of the following:
time synchronization between the first device and the second device; or
frequency synchronization between the first device and the second device.

37. The communication device according to claim 29, wherein the processor is used for reading the computer program from the memory and performing the following steps:
obtaining the response signal corresponding to the target signal based on the received target signal; and
sending and/or reflecting the response signal to the first device.

38. The communication device according to any one of claims 29 to 37, wherein the processor is used for reading the computer program from the memory and performing at least one of the following steps:
receiving a first signal sent by the first device, the first signal being used by the second device to perform energy harvesting and/or energy storage; or
receiving a second signal sent by the first device, the second signal being used by the second device for synchronization and /or timing.

39. An information transmission apparatus, applied to a first device, comprising:
a first sending unit, configured to send at least one target signal to a second device;
a first receiving unit, configured to receive at least one response signal from the second device, the response signal being sent and/or reflected based on the at least one target signal; and
an establishment unit, configured to establish a connection with the second device based on the response signal;
wherein the second device is an Internet of Things (IoT) device.

40. An information transmission apparatus, applied to a second device, comprising:
a second receiving unit, configured to receive at least one target signal sent by a first device; and
a second sending unit, configured to send and/or reflect at least one response signal to the first device based on the at least one target signal;
wherein the second device is an Internet of Things (IoT) device.

41. A processor-readable storage medium storing a computer program, wherein the computer program is configured to cause a processor to perform the method according to any one of claims 1 to 19.

42. A computer program product comprising computer instructions, wherein the computer instructions, when executed by a processor, implement the steps of the method according to any one of claims 1 to 19.
